# FASCICULE DE BREVET EUROPEEN

(11) **EP 3 102 436 B1**
(45) Date de publication et mention de la délivrance du brevet: **10.01.2018**
(21) Numéro de dépôt: 15702457.1
(22) Date de dépôt: 02.02.2015
(51) Int. Cl.: B60C 11/03, B60C 11/12

(54) **BANDE DE ROULEMENT POUR PNEU POIDS LOURD**
LAUFFLÄCHE FÜR SCHWERLASTFAHRZEUGREIFEN
TREAD FOR HEAVY-GOODS VEHICLE TIRE

(30) Priorité: 03.02.2014 FR 1400296
(43) Date de publication de la demande: 14.12.2016
(73) Titulaire: Compagnie Générale des Etablissements Michelin, 63000 Clermont-Ferrand (FR)
(72) Inventeur: ROLLAND, Maxime, F-63040 Clermont-ferrand Cedex 9 (FR); MARLIER, Fabien, F-63040 Clermont-ferrand Cedex 9 (FR); CRESS, Ronnie, Greenville, SC 29605 USA (US); MOORE, Ralston, Greenville, SC 29605 USA (US)
(74) Mandataire: Diernaz, Christian
(86) Numéro de dépôt international: PCT/EP2015/052038
(87) Numéro de publication internationale: WO 2015/114129

(56) Documents cités:
- WO-A1-2012/130735
- WO-A1-2013/014253

## Description

### DOMAINE DE L'INVENTION

La présente invention concerne une bande de roulement de pneu pour véhicule poids lourd et plus particulièrement la sculpture d'une telle bande pour un pneu destiné à être monté sur un essieu moteur.

### ÉTAT DE LA TECHNIQUE

Pour assurer à la fois une adhérence satisfaisante et un bon drainage de l'eau lors de roulage sur chaussée revêtue d'eau il est nécessaire de former sur une bande de roulement un système de découpures plus ou moins complexe comprenant une pluralité de rainures et d'incisions. Ces découpures forment un dessin de sculpture à la fois sur la surface dite surface de roulement destinée à venir en contact avec la chaussée et dans l'épaisseur de la bande.

Il est connu notamment par le document de brevet FR 1452048 de former des découpures larges (rainures) et des découpures étroites (incisions). Ces dernières ont des largeurs appropriées pour pouvoir se refermer lors du passage dans la zone de contact avec la chaussée. Ainsi il est possible de bénéficier de la présence d'arêtes tout en conservant des rigidités suffisantes. La personne du métier doit en conséquence combiner un volume nécessaire de drainage, constitué par les volumes de creux formés notamment par les rainures et des longueurs d'arêtes actives comprenant à la fois les arêtes des rainures et des incisions.

Il est également connu par la publication WO-2010072523-A1 de former un volume de creux réduit à l'état neuf, ce volume de creux comprenant des parties destinées à former de nouvelles rainures après une usure partielle, ces volumes de creux étant reliés aux rainures formées dès l'état neuf par une pluralité d'incisions transversales.

Le document WO-A-2013/014253 divulgue une bande de roulement pour pneu hors la route, cette bande comprenant des rainures circonférentielles et des rainures transversales délimitant une pluralité de blocs de matière.

Le besoin s'est fait sentir d'améliorer encore l'équilibre entre volume total de creux à l'état neuf et les longueurs d'arêtes actives dans le contact de la bande avec la chaussée et cela à différents niveaux d'usure.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Une bande de roulement a une épaisseur maximale PMU de matière à user en roulage ; une fois cette épaisseur atteinte soit le pneu peut être recreusé pour bénéficier de nouvelles rainures soit le pneu est remplacé par un autre pneu neuf.

Le taux de creux surfacique d'une sculpture est égal au rapport entre la surface des creux formés par les rainures et la surface totale (surface de contact des éléments de relief et surface des creux). Un taux de creux faible indique une grande surface de contact des éléments de relief et une faible surface de creux entre ces éléments.

Le taux de creux volumique d'une sculpture d'une bande de roulement à l'état neuf est égal au rapport entre le volume des creux (formés notamment par des rainures, des cavités) formés dans la bande de roulement et le volume total de ladite bande comprenant le volume de matière à user et le volume des creux. Un taux de creux volumique faible indique un faible volume de creux relativement au volume de matière à user de la bande de roulement.

Au fur et à mesure de l'usure de la bande de roulement, il est possible de définir un volume de creux restant ainsi qu'un taux de creux volumique.

Les conditions usuelles de roulage du pneu ou conditions d'utilisation sont celles qui sont définies notamment par la norme E.T.R.T.O. ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

L'empreinte de contact avec la chaussée est réalisée avec le pneu en statique à des conditions qui peuvent être les conditions nominales ou toute autre condition déterminée; à partir de cette empreinte on peut aisément calculer une valeur moyenne de longueur d'empreinte dans la direction circonférentielle.

### BREF EXPOSÉ DE L'INVENTION

La présente invention vise à proposer une bande de roulement pour pneu de véhicule poids lourd, cette bande ayant un dessin de sculpture permettant à la fois une amélioration de la performance en usure ainsi qu'une réduction de résistance au roulement tout en conservant une adhérence appropriée cela quel que soit l'état d'usure de cette bande. Cette invention est applicable plus particulièrement aux bandes de roulement de grande largeur, à savoir de largeur au moins égale à 360 mm.

À cet effet, l'invention a pour objet une bande de roulement pour pneu de véhicule poids lourd, cette bande de roulement ayant une largeur totale W et une épaisseur de matière à user PMU, cette bande étant pourvue d'au moins quatre rainures d'orientation générale circonférentielle, ces rainures divisant la bande de roulement en une région médiane, des régions intermédiaires axialement de part et d'autre de la région médiane et des régions de bord délimitant axialement la bande de roulement. La région médiane est définie comme la région de la bande située entre les deux rainures circonférentielles axialement les plus proches du plan médian équatorial. Cette région médiane a une largeur axiale au moins égale à 30% et au plus égale à 60% de la largeur totale W de la bande de roulement. On mesure un volume de creux total à l'état neuf incluant tous les volumes de creux (rainures, creux cachés à l'intérieur de la bande). De même on mesure pour chaque région précédemment définie un volume de creux total à l'état neuf. Avec l'usure ces volumes de creux diminuent.

Le taux de creux volumique total de la bande à l'état neuf est inférieur à 17% et le taux de creux volumique à l'état neuf de la région médiane est inférieur à la moitié du taux de creux volumique total de la bande à l'état neuf. Le taux de creux volumique total de la bande à l'état neuf étant calculé comme le rapport entre le volume de creux total et un volume total de bande incluant à la fois le volume de matière et le volume de tous les creux, ce volume total de bande étant évalué entre la surface de roulement à l'état neuf et une surface interne s'étendant dans la bande de roulement parallèlement à la surface de roulement à l'état neuf, cette surface interne étant en contact radialement à l'intérieur avec les points les plus à l'intérieur de la bande des rainures circonférentielles les plus profondes.

Cette bande de roulement est telle que la région médiane comprend une pluralité d'incisions transversales ou obliques s'ouvrant dans les rainures circonférentielles délimitant cette région médiane, ces incisions ayant une profondeur au moins égale à 75% de la profondeur des rainures circonférentielles, le nombre d'incisions transversales ou obliques de la région médiane sur un tour complet du pneu étant plus grand que le nombre d'incisions transversales ou obliques éventuellement présentes sur chaque autre région intermédiaire ou de bord.

La largeur axiale de la région médiane est définie comme la distance axiale moyenne séparant les parois axialement les plus à l'intérieur des rainures circonférentielles les plus proches du plan médian équatorial. Cette région médiane est donc dépourvue de toute rainure circonférentielle s'ouvrant sur la surface de roulement à l'état neuf.

Chaque région intermédiaire s'étend entre une limite axiale de la région médiane et la paroi axialement la plus à l'intérieur de l'autre rainure circonférentielle délimitant axialement cette région intermédiaire. La largeur axiale de cette région intermédiaire est égale à la distance axiale moyenne entre ces deux parois précitées. Le volume de creux de la région intermédiaire inclut le volume de la rainure axialement à l'intérieur de cette région intermédiaire.

À partir de ces délimitations de la région médiane, des régions intermédiaires et des régions de bord, il est calculé pour chaque région un taux de creux volumique à l'état neuf ainsi qu'à chaque niveau d'usure partielle à l'image de ce qui a été fait pour obtenir le taux de creux de la bande de roulement.

Par orientation oblique, on entend ici que chaque incision de la partie médiane fait un angle au moins égal à 45 degrés avec la direction circonférentielle. Par orientation transversale on entend qu'une incision fait un angle égal ou voisin de 90 degrés avec la direction circonférentielle.

Dans une variante avantageuse, cette bande de roulement est telle qu'en outre chaque région intermédiaire comprend des incisions transversales ou obliques s'ouvrant dans les rainures circonférentielles, ces incisions ayant une profondeur au moins égale à 75% de la profondeur des rainures circonférentielles, ces incisions transversales étant en disposées avec un pas moyen Pi, le pas moyen Pm des incisions de la région médiane étant inférieur au pas moyen Pi.

Dans une variante de l'invention, les régions de bord sont dépourvues de toute incision transversale ou oblique.

Dans une variante de l'invention, les régions de bord sont pourvues d'incisions d'orientation transversale ou oblique avec un pas moyen Ps, ce pas moyen Ps étant supérieur au pas moyen Pm des incisions de la région médiane.

Préférentiellement le pas moyen Pi des incisions dans chaque région intermédiaire est au moins supérieur à 1.2 fois le pas moyen Pm des incisions de la région médiane.

Dans une variante de l'invention, la bande de roulement telle que définie comprend en outre dans sa région médiane au moins deux incisions circonférentielles, ces incisions circonférentielles étant prolongées à l'intérieur de la bande par des parties élargies formant des canaux, ces canaux étant destinés à former de nouvelles rainures après une usure partielle de la bande de roulement.

Avantageusement, au moins un de ces canaux apparaît sur la surface de roulement à partir d'une usure partielle au plus égale à 60% de l'épaisseur de matière à user PMU.

Dans une variante avantageuse, le taux de creux volumique de la bande à l'état neuf est inférieur à 13% et le taux de creux volumique de la région médiane à l'état neuf est au plus égal à 6% et encore plus préférentiellement au plus égal à 5%.

L'invention concerne également un pneu pourvu d'une bande de roulement telle que précédemment définie, ce pneu étant plus particulièrement - mais pas uniquement - destiné à équiper un essieu moteur d'un véhicule poids lourd.

D'autres caractéristiques et avantages de l'invention ressortent de la description faite ci-après en référence aux dessins annexés qui montrent, à titre d'exemples non limitatifs, une forme de réalisation de l'objet de l'invention.

### BRÈVE DESCRIPTION DES FIGURES

La figure 1 représente une vue en plan du dessin de la sculpture d'une bande de roulement selon une première variante de l'invention ;
La figure 2 représente une vue en coupe selon un plan perpendiculaire à la figure 1 et dont la trace est figurée par la ligne II-II ;
La figure 3 représente une vue en plan du dessin de la sculpture d'une bande de roulement selon une deuxième variante de l'invention ;
La figure 4 représente une vue en coupe selon un plan perpendiculaire à la figure 3 et dont la trace est figurée par la ligne IV-IV.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

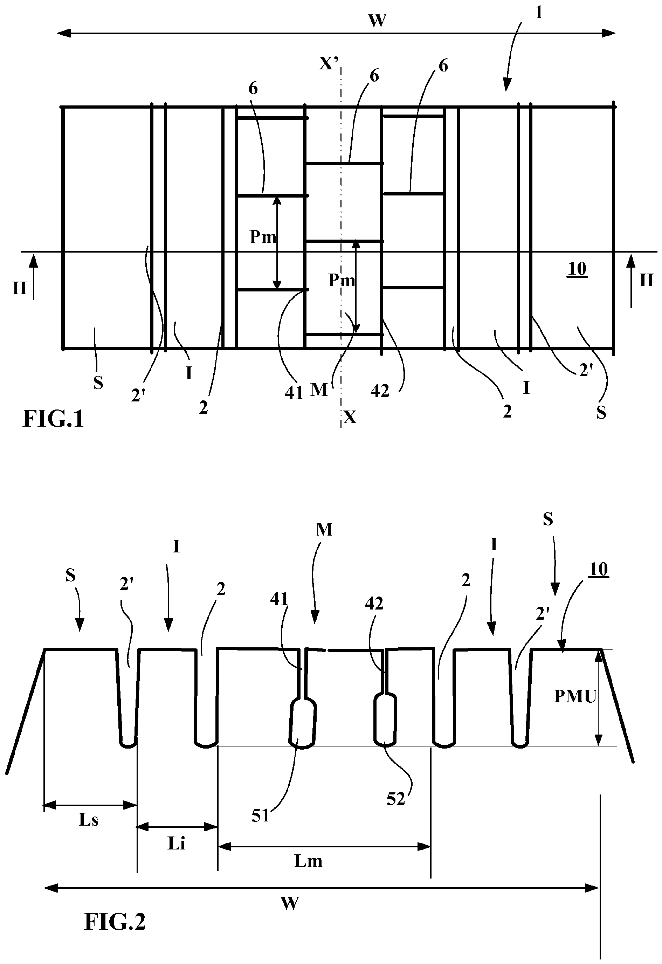

La figure 1 représente une vue en plan du dessin de la sculpture d'une bande de roulement destinée à équiper un pneu de véhicule poids lourd.

Ce pneu de dimension 445/50 R 22.5 est destiné à équiper l'essieu moteur d'un véhicule poids lourd. Ce pneu comprend une bande de roulement 1 dont la surface de roulement 10 à l'état neuf est montrée partiellement avec la figure 1. Cette bande 1 a une largeur W mesurée dans la direction axiale qui est ici égale à 379 mm.

Cette bande de roulement 1 est pourvue d'un dessin de sculpture non directionnel comprenant quatre rainures 2, 2' d'orientation générale circonférentielle et présentant une géométrie en léger zigzag ; ces rainures circonférentielles 2, 2' s'ouvrent sur la surface de roulement 10 à l'état neuf et sont formées de part et d'autre du plan médian équatorial indiqué par sa trace XX' sur cette figure 1. Les deux rainures circonférentielles 2 axialement les plus proches l'une de l'autre délimitent entre elles une région médiane M dont la largeur Lm est ici égale à 145 mm (soit environ 38 % de la largeur totale W).

Axialement à l'extérieur et de chaque côté de la région médiane M il est formé une région intermédiaire I de largeur moyenne Li égale à 52 mm (soit 14% de la largeur totale W) et enfin une région de bord S de largeur moyenne Ls égale à 65 mm (soit 17% de la largeur totale W).

La région médiane M comprend en outre deux incisions 41, 42 d'orientation circonférentielle s'ouvrant sur la surface de roulement 10 à l'état neuf, chacune de ces incisions 41, 42 étant prolongée dans l'épaisseur de la bande par des canaux 51, 52 respectivement, ces canaux étant destinés à former de nouvelles rainures après 70% d'usure (ce pourcentage est calculé par rapport à l'épaisseur de matière à user PMU).

Dans le cas présent, le taux de creux volumique total à l'état neuf est égal à 9% alors que le taux de creux volumique de la région médiane M est égal à 3%. Pour la région intermédiaire I, le taux de creux volumique à l'état neuf est égal à 18% et celui de la région de bord S est égal à 12%. Le taux de creux volumique total est calculé à l'état neuf de la bande en sommant les volumes des rainures circonférentielles et des rainures transversales ainsi que les volumes des canaux. Les taux de creux volumique de la région médiane et des autres régions à l'état neuf sont calculés comme indiqué plus haut dans cette description.

La région médiane M est pourvue d'une pluralité d'incisions obliques 6 s'étendant entre les deux rainures circonférentielles 2 délimitant la région médiane. Ces incisions 6 d'orientation transversale sont disposées avec un pas moyen Pm égal à 33 mm. Ces incisions 6 s'ouvrent dans les rainures circonférentielles 2 précitées et dans les incisions circonférentielles 41, 42 de la région médiane. En outre, ces incisions 6 s'ouvrent dans les canaux 51, 52 formés dans l'épaisseur de la bande de roulement.

Les régions intermédiaires et de bord sont dépourvues de toutes incisions obliques ou transversales.

La figure 2 montre une coupe de la bande montrée avec la figure 1 selon un plan dont la trace sur cette figure 1 correspond à la ligne II-II.

Sur cette figure 2 on constate que les canaux 51, 52 sont destinés à former de nouvelles rainures après une usure égale à 70% de l'épaisseur PMU. Ces canaux s'étendent au maximum dans l'épaisseur jusqu'à un niveau identique à celui des rainures circonférentielles 2, 2' afin de créer de nouvelles rainures jusqu'à usure complète de la bande.

Après usure partielle faisant apparaître ces nouvelles rainures s'ouvrant sur la nouvelle surface de roulement, les répartitions des taux de creux volumiques ont changé et deviennent respectivement :
- 4% pour la partie médiane
- 10 % pour chaque région intermédiaire
- 7% pour chaque région de bord.

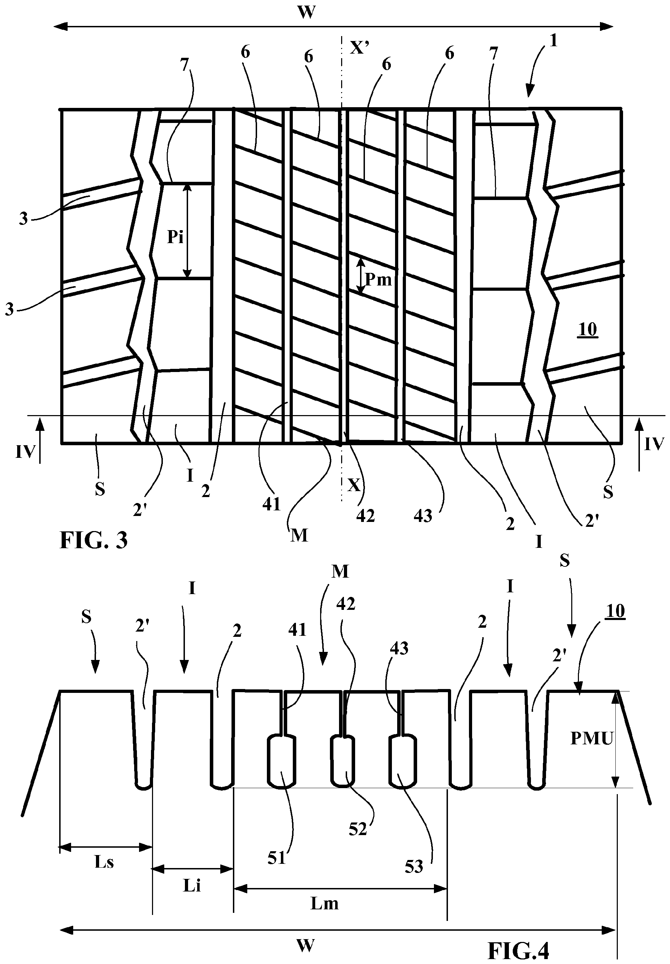

La figure 3 représente une vue en plan du dessin de la sculpture d'une bande de roulement d'un pneu pour véhicule poids lourd.

Ce pneu de dimension 445/50 R 22.5 est destiné à équiper l'essieu moteur d'un véhicule poids lourd. Ce pneu comprend une bande de roulement 1 dont la surface de roulement 10 à l'état neuf est montrée partiellement avec la figure 3. Cette bande 1 a une largeur W mesurée dans la direction axiale qui est ici égale à 395 mm.

Cette bande de roulement 1 est pourvue d'un dessin de sculpture non directionnel comprenant quatre rainures 2, 2' d'orientation générale circonférentielle, les rainures 2' axialement les plus à l'extérieur présentant une géométrie en zigzag. Ces rainures circonférentielles 2, 2' s'ouvrent sur la surface de roulement 10 à l'état neuf et sont formées de part et d'autre du plan médian équatorial indiqué par sa trace XX' sur cette figure 3. Les deux rainures circonférentielles 2 axialement les plus proches l'une de l'autre délimitent entre elles une région médiane M dont la largeur Lm est ici égale à 158 mm (soit 40% de la largeur totale W).

Axialement à l'extérieur de la région médiane M et de part et d'autre de cette région médiane M, il est formé une région intermédiaire I de largeur moyenne Li égale à 54 mm (soit 13.7% de la largeur totale W) et enfin une région de bord S de largeur moyenne Ls égale à 64.5 mm (soit 16.3% de la largeur totale W).

La région médiane M comprend en outre trois incisions 41, 42, 43 rectilignes d'orientation circonférentielle s'ouvrant sur la surface de roulement 10 à l'état neuf, chacune de ces incisions 41, 42, 43 étant prolongée dans l'épaisseur de la bande par des canaux 51, 52, 53 respectivement, ces canaux étant destinés à former de nouvelles rainures après 55% d'usure (ce pourcentage est calculé par rapport à l'épaisseur de matière à user PMU).

Dans le cas présent, le taux de creux volumique total à l'état neuf est égal à 12.3% alors que le taux de creux volumique de la région médiane M est égal à 4.8%. Pour la région intermédiaire I, le taux de creux volumique à l'état neuf est égal à 17.6% et celui de la région de bord S est égal à 16.2%. Le taux de creux volumique total est calculé à l'état neuf de la bande en sommant les volumes des rainures circonférentielles et des rainures transversales ainsi que les volumes des canaux. Les taux de creux volumique de la région médiane et des autres régions à l'état neuf sont calculés comme indiqué plus haut dans cette description.

La région médiane M est pourvue d'une pluralité d'incisions obliques 6 s'étendant entre les deux rainures circonférentielles 2 délimitant la région médiane. Ces incisions obliques 6 sont disposées avec un pas moyen Pm identique sur toutes les rangées qui est égal à 27 mm. Ces incisions 6 s'ouvrent dans les rainures circonférentielles 2 précitées et dans les incisions circonférentielles 41, 42, 43 de la région médiane. En outre, ces incisions obliques 6 s'étendent dans l'épaisseur de la bande jusqu'à une profondeur égale à celle des rainures circonférentielles et s'ouvrent dans les canaux 51, 52 formés dans l'épaisseur de la bande de roulement.

Chaque région intermédiaire I est pourvue d'une pluralité d'incisions 7 d'orientation transversale. Ces incisions obliques 7 sont disposées avec un pas moyen Pi qui est supérieur au pas moyen Pm des incisions de la région médiane ; dans le cas présent le pas moyen Pi est égal à 33 mm (le rapport Pi/Pm est égal à 1.22).

Chaque région de bord S comprend une pluralité de rainures 3 de faible profondeur ; ces rainures 3 orientées obliquement sont destinées à disparaître, dans le cas présent, après une usure partielle égale à 6% (taux calculé par rapport à l'épaisseur totale de matière à user PMU). Ces rainures 3 sont disposées circonférentiellement avec un pas identique au pas moyen Pi des incisions 7 de la région intermédiaire.

La figure 4 montre une coupe de la bande montrée avec la figure 3 selon un plan dont la trace sur cette figure 3 correspond à la ligne IV-IV.

Sur cette figure 4 on observe que les canaux 51, 52, 53 sont destinés à former de nouvelles rainures après une usure sensiblement égale à 50% de l'épaisseur PMU. Ces canaux s'étendent dans la profondeur de la bande jusqu'à un niveau égal à celui des rainures 2, 2' s'ouvrant sur la surface de roulement à l'état neuf.

Après usure partielle faisant apparaître ces nouvelles rainures s'ouvrant sur la nouvelle surface de roulement, les répartitions des taux de creux volumiques ont changé et deviennent respectivement :
- 8.4% pour la partie médiane
- 13.6 % pour chaque région intermédiaire
- 11.1% pour chaque région de bord.

Grâce aux dispositions selon l'invention décrites notamment avec ces deux variantes, il a été possible d'améliorer sensiblement la tenue en usure ainsi que la résistance au roulement tout en conservant une adhérence appropriée cela quel que soit l'état d'usure de la bande de roulement.

L'invention qui a été décrite avec le support de ces deux exemples ne doit bien entendu pas être limitée à ces exemples et diverses modifications peuvent y être apportées sans sortir du cadre défini par les revendications.

## Revendications

1. Bande de roulement (1) pour pneu de véhicule poids lourd, cette bande de roulement ayant une largeur totale axiale W et une épaisseur de matière à user PMU, cette bande étant pourvue d'au moins quatre rainures (2, 2') d'orientation générale circonférentielle de part et d'autre d'un plan médian divisant axialement la bande en deux parties de largeurs égales, ces rainures (2, 2') d'orientation générale circonférentielle divisant la bande de roulement en une région médiane, des régions intermédiaires axialement de part et d'autre de la région médiane et des régions de bord délimitant axialement la bande de roulement, la région médiane étant définie comme la région de la bande située entre les deux rainures circonférentielles axialement les plus proches de part et d'autre du plan médian équatorial, cette région médiane ayant une largeur axiale Lm au moins égale à 30% et au plus 60% de la largeur totale W de la bande de roulement, le taux de creux volumique total de la bande à l'état neuf est inférieur à 17%, ce taux de creux étant calculé comme le rapport entre le volume de creux total et un volume total de bande incluant tous les creux et évalué entre la surface de roulement à l'état neuf et une surface interne s'étendant dans la bande de roulement parallèlement à la surface de roulement à l'état neuf, cette surface interne étant en contact radialement à l'intérieur avec les points les plus à l'intérieur de la bande des rainures circonférentielles les plus profondes, la région médiane ayant un taux de creux volumique à l'état neuf inférieur à la moitié du taux de creux volumique total de la bande à l'état neuf, cette bande de roulement étant **caractérisée en ce que** la région médiane comprend une pluralité d'incisions (6) transversales ou obliques s'ouvrant dans les rainures circonférentielles, ces incisions (6) ayant une profondeur au moins égale à 75% de la profondeur des rainures circonférentielles (2, 2'), le nombre d'incisions (6) transversales ou obliques de la région médiane sur un tour complet du pneu étant plus grand que le nombre d'incisions transversales ou obliques éventuellement présentes sur chaque autre région intermédiaire ou de bord.

2. Bande de roulement selon la revendication 1 **caractérisée en ce que** chaque région intermédiaire est pourvue d'une pluralité d'incisions (7) transversales ou obliques, ces incisions (7) ayant une profondeur au moins égale à 75% de la profondeur des rainures circonférentielles (2, 2'), selon un pas moyen Pi, le pas moyen Pm des incisions (6) de la région médiane étant inférieur au pas moyen Pi.

3. Bande de roulement selon la revendication 1 ou la revendication 2 **caractérisée en ce que** les régions de bord sont dépourvues de toute incision transversale ou oblique.

4. Bande de roulement selon la revendication 1 ou la revendication 2 **caractérisée en ce que** les régions de bord sont pourvues d'incisions (3) transversales ou obliques avec un pas moyen Ps, ce pas moyen Ps étant inférieur au pas moyen Pm des incisions de la région médiane.

5. Bande de roulement selon l'une quelconque des revendications 1 à 4 **caractérisée** en ce le pas moyen Pi des incisions dans chaque région intermédiaire est au moins supérieur à 1.2 fois le pas moyen Pm des incisions de la région médiane.

6. Bande de roulement selon l'une quelconque des revendications 1 à 5 **caractérisée en ce que** la région médiane comprend en outre au moins deux incisions circonférentielles, ces incisions circonférentielles étant prolongées à l'intérieur de la bande par des parties élargies formant des canaux, ces canaux étant destinés à former de nouvelles rainures après une usure partielle de la bande de roulement.

7. Bande de roulement selon la revendication 6 **caractérisée en ce qu'**au moins un des canaux apparaît sur la surface de roulement à partir d'une usure partielle au plus égale à 60% de l'épaisseur de matière à user PMU.

8. Bande de roulement selon l'une quelconque des revendications 1 à 7 **caractérisée en ce que** le taux de creux volumique de la bande à l'état neuf est inférieur à 13% et le taux de creux volumique de la région médiane à l'état neuf est au plus égal à 6%.

9. Pneu comprenant une bande de roulement selon l'une quelconque des revendications 1 à 8 **caractérisée en ce que** ce pneu est destiné à équiper un essieu moteur d'un véhicule poids lourd.

## Patentansprüche

1. Laufstreifen (1) für einen Schwerlastfahrzeugreifen, wobei dieser Laufstreifen eine axiale Gesamtbreite W und eine Dicke des zu verschleißenden Materials PMU aufweist, wobei dieser Streifen mit wenigstens vier Rillen (2, 2') mit einer Ausrichtung im Wesentlichen in Umfangsrichtung beiderseits einer Mittelebene, die den Streifen axial in zwei Teile mit gleichen Breiten aufteilt, versehen ist, wobei diese Rillen (2, 2') mit einer Ausrichtung im Wesentlichen in Umfangsrichtung den Laufstreifen in einen mittleren Bereich, Zwischenbereiche axial beiderseits des mittleren Bereichs und Randbereiche, die den Laufstreifen axial begrenzen, aufteilen, wobei der mittlere Bereich als der Bereich des Streifens definiert ist, der sich zwischen den zwei Umfangsrillen befindet, die der äquatorialen Mittelebene beiderseits am nächsten sind, wobei dieser mittlere Bereich eine axiale Breite Lm aufweist, die wenigstens gleich 30 % und höchstens gleich 60 % der Gesamtbreite W des Laufstreifens ist, wobei der Gesamt-Hohlraumvolumenanteil des Streifens im neuen Zustand kleiner als 17 % ist, wobei dieser Hohlraumanteil als das Verhältnis zwischen dem Gesamt-Hohlraumvolumen und einem Gesamtvolumen des Streifens einschließlich aller Hohlräume berechnet wird und zwischen der Lauffläche im neuen Zustand und einer inneren Fläche ermittelt wird, die sich im Laufstreifen parallel zur Lauffläche im neuen Zustand erstreckt, wobei sich diese innere Fläche radial innen in Kontakt mit den am weitesten im Inneren des Streifens befindlichen Punkten der tiefsten Umfangsrillen befindet, wobei der mittlere Bereich einen Hohlraumvolumenanteil im neuen Zustand aufweist, der kleiner als die Hälfte des Gesamt-Hohlraumvolumenanteils des Streifens im neuen Zustand ist, wobei dieser Laufstreifen **dadurch gekennzeichnet ist, dass** der mittlere Bereich mehrere quer oder schräg verlaufende Einschnitte (6) umfasst, die sich in den Umfangsrillen öffnen, wobei diese Einschnitte (6) eine Tiefe aufweisen, die wenigstens gleich 75 % der Tiefe der Umfangsrillen (2, 2') ist, wobei die Anzahl der quer oder schräg verlaufenden Einschnitte (6) des mittleren Bereichs auf einem gesamten Umfang des Reifens größer als die Anzahl quer oder schräg verlaufender Einschnitte ist, die eventuell auf jedem anderen Zwischen- oder Randbereich vorhanden sind.

2. Laufstreifen nach Anspruch 1, **dadurch gekennzeichnet, dass** jeder Zwischenbereich mit mehreren quer oder schräg verlaufenden Einschnitten (7) versehen ist, wobei diese Einschnitte (7) eine Tiefe aufweisen, die wenigstens gleich 75 % der Tiefe der Umfangsrillen (2, 2') ist, und einen mittleren Abstand Pi, wobei der mittlere Abstand Pm der Einschnitte (6) des mittleren Bereichs kleiner als der mittlere Abstand Pi ist.

3. Laufstreifen nach Anspruch 1 oder Anspruch 2, **dadurch gekennzeichnet, dass** die Randbereiche mit keinen quer oder schräg verlaufenden Einschnitten versehen sind.

4. Laufstreifen nach Anspruch 1 oder Anspruch 2, **dadurch gekennzeichnet, dass** die Randbereiche mit quer oder schräg verlaufenden Einschnitten (3) mit einem mittleren Abstand Ps versehen sind, wobei dieser mittlere Abstand Ps kleiner als der mittlere Abstand Pm der Einschnitte des mittleren Bereichs ist.

5. Laufstreifen nach einem der Ansprüche 1 bis 4, **dadurch gekennzeichnet, dass** der mittlere Abstand Pi der Einschnitte in jedem Zwischenbereich wenigstens größer als das 1,2-fache des mittleren Abstands Pm der Einschnitte des mittleren Bereichs ist.

6. Laufstreifen nach einem der Ansprüche 1 bis 5, **dadurch gekennzeichnet, dass** der mittlere Bereich außerdem wenigstens zwei Umfangseinschnitte umfasst, wobei diese Umfangseinschnitte im Inneren des Streifens durch verbreiterte Teile verlängert sind, die Kanäle bilden, wobei diese Kanäle dazu bestimmt sind, nach einem teilweisen Verschleiß des Laufstreifens neue Rillen zu bilden.

7. Laufstreifen nach Anspruch 6, **dadurch gekennzeichnet, dass** wenigstens einer der Kanäle ab einem teilweisen Verschleiß, der höchstens gleich 60 % der Dicke des zu verschleißenden Materials PMU ist, auf der Lauffläche erscheint.

8. Laufstreifen nach einem der Ansprüche 1 bis 7, **dadurch gekennzeichnet, dass** der Hohlraumvolumenanteil des Streifens im neuen Zustand kleiner als 13 % ist und der Hohlraumvolumenanteil des mittleren Bereichs im neuen Zustand höchstens gleich 6 % ist.

9. Reifen, welcher einen Laufstreifen nach einem der Ansprüche 1 bis 8 umfasst, **dadurch gekennzeichnet, dass** dieser Reifen dazu bestimmt ist, auf einer Antriebsachse eines Schwerlastfahrzeugs montiert zu werden.

## Claims

1. Tread (1) for a heavy vehicle tyre, this tread having a total axial width W and a wearable thickness PMU of material, this tread being provided with at least four grooves (2, 2') of circumferential overall orientation on each side of a midplane that divides the tread axially into two parts of equal width, these grooves (2, 2') of circumferential overall orientation dividing the tread into a middle region, intermediate regions axially on each side of the middle region and edge regions axially delimiting the tread, the middle region being defined as the region of the tread situated between the two circumferential grooves that are axially most closely spaced on each side of the equatorial midplane, this middle region having an axial width Lm at least equal to 30% and at most equal to 60% of the total width W of the tread, the total volume void ratio of the tread when new is less than 17%, this void ratio being calculated as the ratio between the total void volume and a total volume of tread including all the voids and evaluated between the tread surface when new and an internal surface extending in the tread parallel to the tread surface when new, this internal surface being in contact radially on the inside with those points of the deepest circumferential grooves that are furthest towards the inside of the tread, the middle region having a volume void ratio when new that is less than half the total volume void ratio of the tread when new, this tread being **characterized in that** the middle region comprises a plurality of transverse or oblique sipes (6) opening into the circumferential grooves, these sipes (6) having a depth at least equal to 75% of the depth of the circumferential grooves (2, 2'), the number of transverse or oblique sipes (6) in the middle region over one complete turn of the tyre being greater than the number of transverse or oblique sipes that may potentially be present on each other intermediate or edge region.

2. Tread according to Claim 1, **characterized in that** each intermediate region is provided with a plurality of transverse or oblique sipes (7), these sipes (7) having a depth at least equal to 75% of the depth of the circumferential grooves (2, 2'), with a mean spacing Pi, the mean spacing Pm of the sipes (6) of the middle region being less than the mean spacing Pi.

3. Tread according to Claim 1 or Claim 2, **characterized in that** the edge regions have no transverse or oblique sipe at all.

4. Tread according to Claim 1 or Claim 2, **characterized in that** the edge regions are provided with transverse or oblique sipes (3) at a mean spacing Ps, this mean spacing Ps being less than the mean spacing Pm of the sipes in the middle region.

5. Tread according to any one of Claims 1 to 4, **characterized in that** the mean spacing Pi of the sipes in each intermediate region is at least greater than 1.2 times the mean spacing Pm of the sipes in the middle region.

6. Tread according to any one of Claims 1 to 5, **characterized in that** the middle region further comprises at least two circumferential sipes, these circumferential sipes being extended into the tread by widened parts forming channels, these channels being intended to form new grooves after the tread has become part-worn.

7. Tread according to Claim 6, **characterized in that** at least one of the channels appears at the tread surface when the degree of part-wear reaches at most 60% of the wearable thickness PMU of material.

8. Tread according to any one of Claims 1 to 7, **characterized in that** the volume void ratio of the tread when new is less than 13% and the volume void ratio of the middle region when new is at most equal to 6%.

9. Tyre comprising a tread according to any one of Claims 1 to 8, **characterized in that** this tyre is intended to be fitted to a drive axle of a heavy vehicle.
